# EUROPÄISCHE PATENTANMELDUNG

(11) **EP 2 740 979 A1**
(43) Veröffentlichungstag der Anmeldung: **11.06.2014**
(21) Anmeldenummer: 12008151.8
(22) Anmeldetag: 05.12.2012
(51) Int. Cl.: F16K 27/04, F16K 51/02

(54) **Vakuumventil**

(71) Anmelder: VAT Holding AG, 9469 Haag (CH)
(72) Erfinder: Duelli, Bernhard, 6830 Übersaxen (AT); Blecha, Thomas, 6800 Feldkirch (AT); Neumeir, Anton, 86415 Mering (DE); Angst, Christoph, 9453 Eichberg (CH)
(74) Vertreter: Hofmann, Ralf U.

(57) **Zusammenfassung**

Ein Vakuumventil umfasst ein Verschlussglied (3) und ein Ventilgehäuse (1) mit einer Ventilöffnung (4) und mit einem Innenraum (2), in dem das Verschlussglied (3) angeordnet ist, welches im geschlossenen Zustand des Vakuumventils an einem die Ventilöffnung (4) umgebenden Ventilsitz (6) anliegt. Das Ventilgehäuse (1) weist eine den Innenraum (2) begrenzende Gehäusewand (19) aus Blech auf, welche zur Ausbildung der Ventilöffnung (4) mit einer Fensterausnehmung (20) versehen ist. Die Ventilöffnung (4) ist von einem Flanschring (21) umgeben ist, der über Schraubverbindungen mit einem Anschlussflansch (28) einer einen Innenraum aufweisenden Vakuumeinheit (27) verbindbar, an welche das Vakuumventil anschließbar ist. Der Flanschring (21) weist den Ventilsitz (6) auf, an den das Verschlussglied (3) im geschlossenen Zustand des Vakuumventils angelegt ist.

## Beschreibung

Die Erfindung bezieht sich auf ein Vakuumventil umfassend ein Verschlussglied und ein Ventilgehäuse mit einer Ventilöffnung und mit einem Innenraum, in dem das Verschlussglied angeordnet ist, welches im geschlossenen Zustand des Vakuumventils an einem die Ventilöffnung umgebenden Ventilsitz anliegt, wobei das Ventilgehäuse eine den Innenraum begrenzende Gehäusewand aus Blech aufweist, welche zur Ausbildung der Ventilöffnung mit einer Fensterausnehmung versehen ist, und wobei die Ventilöffnung von einem Flanschring umgeben ist, der über Schraubverbindungen mit einem Anschlussflansch einer einen Innenraum aufweisenden Vakuumeinheit verbindbar ist, an welche das Vakuumventil anschließbar ist.

Es ist bekannt, bei Vakuumventilen Gehäusewände aus Blech auszubilden, um Materialeinsparungen zu erreichen. Ein Vakuumventil der eingangs genannten Art geht aus der WO 2011/088482 A1 und der US 7,011,294 B1 hervor. Das Vakuumventil weist Gehäusehälften aus Blech auf, welche gegenüberliegende erste und zweite Gehäusewände bilden, die jeweils mit einer Fensterausnehmung zur Ausbildung einer Ventilöffnung versehen sind. Eine jeweilige Seitenwand des Ventilgehäuses wird von umgebogenen Abschnitten der beiden Gehäusehälften gebildet, wobei die beiden Gehäusehälften im Bereich der Seitenwände miteinander verschweißt sind. An den Außenseiten der gegenüberliegenden Gehäusewände sind die Fensterausnehmungen umgebende Rohrstutzen angeschweißt, an welche wiederum massive Flanschringe angeschweißt sind. Über diese massiven Flanschringe, welche mit Durchgangsbohrungen versehen sind, kann das Vakuumventil mit einem Anschlussflansch einer weiteren Vakuumeinheit, beispielsweise einer Vakuumkammer oder einer Rohrleitung, verschraubt werden. Um dem Ventilgehäuse die notwendige Stabilität zu verleihen, sind weitere Maßnahmen erforderlich, insbesondere müssen zwischen den beiden Flanschringen verlaufende und diese gegeneinander abstützende Abstützteile vorgesehen werden, welche an den beiden Flanschringen angeschweißt sind. Die Herstellung des Vakuumventils wird dadurch verteuert.

Ein anderes, insgesamt aus Blech bestehendes Ventil geht aus der DE 29 27 369 A1 hervor.

Bekannt sind im Weiteren Vakuumventile mit einem massiven Ventilgehäuse, bei welchen innerhalb des Ventilgehäuses ein auswechselbares ringförmiges Einsatzteil vorgesehen ist. Das Einsatzteil, das über eine Dichtung gegenüber dem Ventilgehäuse abgedichtet ist, weist den Ventilsitz auf, an den das Verschlussglied im geschlossenen Zustand des Vakuumventils angelegt ist. Ein solches Vakuumventil geht beispielsweise aus der JP 2012-72888 A hervor. Das Verschlussglied ist hier zwischen seiner Offenstellung und seiner Schließstellung, die es im geschlossenen Zustand des Vakuumventils einnimmt, geradlinig verfahrbar, wobei die am Verschlussglied angeordnete Dichtung und die am Ventilsitz angeordnete Dichtfläche eine dreidimensionale Kontur aufweisen. Weitere solche Vakuumventile mit austauschbarem Ventilsitz sind durch Vorbenutzung bekannt. Der Ventilsitz ist hierbei vom Innenraum des Ventilgehäuses her mit der die Ventilöffnung aufweisenden Gehäusewand verschraubbar, indem Verbindungsschrauben durch Durchgangsöffnungen des Ventilsitzes in sacklochartige Gewindebohrungen in der Gehäusewand eingeschraubt werden. Die Dichtung zwischen dem Ventilsitz und der Gehäusewand wird dadurch verpresst. Durch die Abnehmbarkeit des Ventilsitzes, auch wenn das Ventilgehäuse des Vakuumventils mit einer weiteren Vakuumeinheit verbunden bleibt, kann bei einem Verschleiß des Ventilsitzes, beispielsweise durch aggressive Prozessgase, der Ventilsitz ausgetauscht werden. Auch können Ventilsitze mit unterschiedlichen Oberflächen eingesetzt werden, die beispielsweise gegenüber unterschiedlichen Prozessgasen, die bei unterschiedlichen Vakuumprozessen eingesetzt werden, resistent sind. Ein weiteres Vakuumventil mit austauschbarem Ventilsitz geht aus der US 8,272,825 B2 hervor (vgl. Fig. 4A, rechte Seite). Das den Ventilsitz aufweisende Einsatzteil erstreckt sich hier durch die Fensterausnehmung in der massiven Gehäusewand bis zur Außenseite des Ventilgehäuses und weist dort eine Dichtung auf, um das Prozessgas von der Flanschdichtung des Ventilgehäuses abzuschirmen, welche in einer Nut der massiven Gehäusewand angeordnet ist.

Aufgabe der Erfindung ist es ein vorteilhaftes und kostengünstig ausbildbares Vakuumventil der eingangs genannten Art bereitzustellen. Erfindungsgemäß gelingt dies durch ein Vakuumventil mit den Merkmalen des Anspruchs 1.

Beim Vakuumventil gemäß der Erfindung weist der Flanschring den Ventilsitz auf, an den das Verschlussglied im geschlossenen Zustand des Vakuumventils angelegt ist. Dem Flanschring kommt somit eine Doppelfunktion zu. Zum einen erfolgt über ihn die Schraubverbindung des Vakuumventils mit dem Anschlussflansch einer Vakuumeinheit, an welche das Vakuumventil anzuschließen ist, zum anderen bildet der Flanschring auch den Ventilsitz des Vakuumventils aus. Dies ermöglicht eine vorteilhafte Kraftübertragung der im geschlossenen Zustand vom Verschlussglied auf den Ventilsitz ausgeübten Kraft oder zumindest eines Teils hiervon, auf die Vakuumeinheit, an welche das Vakuumventil angeschlossen ist. Die an das Ventilgehäuse des Vakuumventils gestellten Steifigkeitserfordernisse werden dadurch wesentlich verringert, was eine Verringerung des Konstruktionsaufwandes und somit eine Einsparung von Kosten ermöglicht. Diese Kraftübertragung erfolgt vorteilhafterweise über die Gehäusewand, die in einem an die Fensterausnehmung anschließenden, insbesondere ringförmigen, Bereich zwischen dem Flanschring und dem Anschlussflansch geklemmt ist.

Zur Ausbildung der Schraubverbindungen zwischen dem Flanschring und dem Anschlussflansch der Vakuumeinheit ist in einer möglichen Ausführungsform der Erfindung vorgesehen, den Flanschring mit Gewindebohrungen zu versehen. Vorteilhafterweise sind diese in Form von Sacklochbohrungen ausgebildet, welche in die Oberfläche des Flanschrings eingebracht sind, die vom Ventilsitz weggerichtet ist, also von der Innenseite des Ventilgehäuses abgewandt ist. Bei der Ausbildung des Flanschrings mit Gewindebohrungen kann der Anschlussflansch günstigerweise mit Durchgangsbohrungen ausgebildet sein, durch welche die Verbindungsschrauben durchgesteckt und in die Gewindebohrungen des Flanschrings eingeschraubt werden, wobei ihre Köpfe sich am Anschlussflansch abstützen. In einer anderen möglichen Ausführungsform ist zur Ausbildung der Schraubverbindungen zwischen dem Flanschring und dem Anschlussflansch der Vakuumeinheit vorgesehen, dass der Flanschring Durchgangsbohrungen zum Durchstecken von Verbindungsschrauben aufweist. Die Verbindungsschrauben werden in diesem Fall günstigerweise vom Innenraum des Ventilgehäuses her durch die Durchgangsbohrungen im Flanschring durchgesteckt und in Gewindebohrungen im Anschlussflansch eingeschraubt. Diese Gewindebohrungen sind beispielsweise in Form von Sacklochbohrungen ausgebildet, welche von der dem Ventilgehäuse zugewandten Oberfläche des Anschlussflansches ausgehen.

Vorteilhafterweise stützt sich der Flanschring im Montagezustand an seiner dem Ventilsitz gegenüberliegenden Seite, also mit seiner vom Ventilsitz weggerichteten Oberfläche, an der Gehäusewand in einem an die Fensterausnehmung der Gehäusewand anschließenden, die Fensterausnehmung umgebenden Abstützbereich der Gehäusewand ab. Im mit dem Anschlussflansch der Vakuumeinheit verbundenen Zustand stützt sich die Gehäusewand, zumindest über einen Teil des Abstützbereiches, vorzugsweise zumindest über den gesamten Abstützbereich, gegebenenfalls auch über einen über den Abstützbereich hinausgehenden Bereich, am Anschlussflansch ab. Zumindest über einen Teil des Abstützbereiches, vorzugsweise über den gesamten Abstützbereich, wird die Gehäusewand somit zwischen dem Flanschring und dem Anschlussflansch geklemmt, gegebenenfalls über einen zwischen der Gehäusewand und dem Flanschring und/oder über einen zwischen der Gehäusewand und dem Anschlussflansch der Vakuumeinheit angeordneten Dichtring. Durch diese Klemmung kommt es auch zu einer insgesamten Versteifung des Ventilgehäuses.

Um den Flanschring, wenn das Vakuumventil nicht mit einer Vakuumeinheit verbunden ist, unverlierbar an der Gehäusewand zu halten, ist der Flanschring vorzugsweise über Halterungsschrauben mit der Gehäusewand verbunden. Die Verbindung mit der Vakuumeinheit über die Verbindungsschrauben kann hierbei so ausgelegt sein, dass die Halterungsschrauben im an die Vakuumeinheit vakuumdicht angeschlossenen Zustand des Vakuumventils die Halterungsschrauben funktionslos sind. Es kann hierbei im angeschlossenen Zustand des Vakuumventils an der Vakuumeinheit ein Spiel in der Schraubverbindung zwischen dem Flanschring und der Gehäusewand auftreten.

Die Schraubverbindung zwischen dem Flanschring und der Gehäusewand mittels der Halterungsschrauben erfolgt vorteilhafterweise derart, dass die Halterungsschrauben durch Durchgangsöffnungen in der Gehäusewand in Gewindebohrungen im Flanschring eingeschraubt sind. Die Köpfe der Verbindungsschrauben liegen hierbei außerhalb des Ventilgehäuses, also auf der vom Ventilsitz abgewandten Seite der Gehäusewand.

In einer möglichen Ausführungsform der Erfindung ist vorgesehen, dass zwischen dem Flanschring und der Gehäusewand ein Dichtungsring angeordnet ist. Stattdessen oder zusätzlich kann ein Dichtring zwischen der Gehäusewand und dem Anschlussflansch angeordnet sein.

Zur Abdichtung zwischen dem Flanschring des Vakuumventils und dem Anschlussflansch der Vakuumeinheit kann am Flanschring eine ringförmige Dichtung angeordnet sein, die beispielsweise in einer Nut des Flanschrings angeordnet ist oder an den Flanschring anvulkanisiert ist. Diese ist zum Zusammenwirken mit einer am Anschlussflansch vorgesehenen ringförmigen Dichtfläche vorgesehen. Alternativ könnte der Flanschring auch eine ringförmige Dichtfläche aufweisen, die zum Zusammenwirken mit einer am Anschlussflansch angeordneten ringförmigen Dichtung vorgesehen ist. Die zuvor genannten Maßnahmen könnten auch kombiniert werden.

In einer vorteilhaften Ausführungsform der Erfindung umfasst das Ventilgehäuse zusätzlich zur bislang beschriebenen ersten Gehäusewand aus Blech eine zweite Gehäusewand aus Blech, die zur Ausbildung einer zweiten Ventilöffnung des Ventilgehäuses mit einer Fensterausnehmung versehen ist. Zusätzlich zum bislang beschriebenen ersten Flanschring ist hierbei ein zweiter Flanschring vorgesehen, welcher die zweite Ventilöffnung umgibt und welcher über Schraubverbindungen mit einem Anschlussflansch einer weiteren Vakuumeinheit verbindbar ist, an die das Vakuumventil anschließbar ist. In einer möglichen ersten Variante dieser Ausführungsform ist hierbei der zweite Flanschring völlig analog zum ersten Flanschring ausgebildet und in gleicher Weise mit den weiteren Teilen (Gehäusewand, Vakuumeinheit) verbunden oder verbindbar, außer dass der zweite Flanschring keinen Ventilsitz für ein Verschlussglied ausbildet. In einer zweiten möglichen Variante bildet der zweite Flanschring auch einen zweiten Ventilsitz, an welchem das Verschlussglied oder ein weiteres Verschlussglied anlegbar ist.

Bei einem erfindungsgemäßen Vakuumventil kann das Verschlussglied und entsprechend die geometrische Form des Ventilsitzes in sehr unterschiedlicher Weise ausgebildet sein. Das Gleiche gilt für den Ventilantrieb.

Beispielsweise kann bei einem erfindungsgemäßen Vakuumventil die Bewegung des Verschlussgliedes zwischen seiner Offenstellung im geöffneten Zustand des Vakuumventils und seiner Schließstellung im geschlossenen Zustand des Vakuumventils im Wesentlichen L-förmig sein. Solche Ventile mit L-Bewegung sind beispielsweise aus der US 6,431,518 B1, WO 2010/065976 A1 oder der WO 2010/034046 A1 bekannt und der Ventilantrieb und die Form des Verschlussgliedes eines erfindungsgemäßen Vakuumventils können beispielsweise wie in diesen Schriften beschrieben ausgebildet sein. Die einzelnen Bewegungskomponenten der L-Bewegung können hierbei vom gleichen oder von unterschiedlichen Aktuatoren hervorgerufen werden.

Ein erfindungsgemäßes Vakuumventil kann beispielsweise auch derart ausgebildet sein, dass die gesamte Schließbewegung zwischen der Offenstellung und der Schließstellung des Verschlussgliedes insgesamt geradlinig erfolgt. Solche Vakuumventile, bei denen auch kein Aufspreizen des Verschlussgliedes erfolgt, sind beispielsweise aus der US 4,809,950 A, US 6,685,163 B2, US 4,921,213 A oder der eingangs genannten US 7,011,294 B1 bekannt. Der Ventilantrieb, die Form des Verschlussgliedes und der Ventilsitz eines erfindungsgemäßen Vakuumventils können beispielsweise wie in diesen Schriften beschrieben ausgebildet sein. Beispielsweise aus der US 4,052,036 A oder US 4,470,576 A sind Vakuumventile nach Art eines Schieberventils bekannt. Der Ventilantrieb und die Form des Verschlussglieds eines erfindungsgemäßen Vakuumventils können beispielsweise wie in diesen Schriften beschrieben ausgebildet sein. Beispielsweise aus der US 7,011,294 B1 und der WO 2011/088482 A1 gehen Vakuumventile mit keilförmigen, aufspreizbaren Verschlussgliedern hervor. Die Form des Verschlussgliedes, des Ventilsitzes und der Ventilantrieb eines erfindungsgemäßen Vakuumventils können beispielsweise wie in diesen Schriften beschrieben ausgebildet sein.

Auch eine Ausbildung eines erfindungsgemäßen Vakuumventils mit einem zwischen seiner Offenstellung und seiner Schließstellung um eine Achse schwenkbaren Verschlussglied ist denkbar und möglich. Vakuumventile mit Verschlussgliedern, welche zwischen der Offenstellung und einer dem Ventilsitz gegenüberliegenden, aber vom Ventilsitz abgehobenen Stellung um eine Achse schwenkbar sind, die rechtwinkelig zur Ebene steht, in der der Ventilsitz liegt, werden auch als Pendelventile bezeichnet. Der Ventilantrieb und die Form des Verschlussgliedes und des Ventilsitzes eines erfindungsgemäßen Vakuumventils können auch nach Art eines Pendelventils ausgebildet sein.

Die Erfindung ermöglicht es vorteilhafterweise unterschiedliche Flanschringe in ein ansonsten gleich ausgebildetes Ventilgehäuse einzusetzen. Es kann somit ein modulares System bereitgestellt werden, bei welchem das Ventilgehäuse in einfacher Weise durch Einsatz eines entsprechenden Flanschringes an unterschiedliche Verschlussglieder und/oder Ventilantriebe angepasst werden kann, auch gemäß unterschiedlichen Dichtprinzipien, beispielsweise nach Art von L-Ventilen oder von Ventilschiebern.

Weitere Vorteile und Einzelheiten der Erfindung werden im Folgenden anhand der beiliegenden Zeichnung erläutert. In dieser zeigen:
Fig. 1 eine Ansicht eines Ausführungsbeispiels eines Vakuumventils gemäß der Erfindung;
Fig. 2 einen Schnitt entlang der Linie AA von Fig. 1;
Fig. 3 einen Schnitt entlang der Linie BB von Fig. 1 (ohne Darstellung des Ventilantriebes);
Fig. 4 ein vergrößertes Detail X von Fig. 2;
Fig. 5 ein vergrößertes Detail Y von Fig. 3;
Fig. 6 und 7 Schnitte analog Fig. 2 und Fig. 3 (ohne Darstellung des Ventilantriebes), im an Vakuumeinheiten in Form von Vakuumkammern angeschlossenen Zustand des Vakuumventils;
Fig. 8 und 9 vergrößerte Details V und W von Fig. 6 und Fig. 7;
Fig. 10 eine Schrägsicht des Vakuumventils mit explosionsartig auseinandergezogen dargestellten Teilen des Vakuumventils;
Fig. 11 und Fig. 12 Schnitte analog Fig. 6 und Fig. 7, wobei das Vakuumventil an modifiziert ausgebildete Vakuumeinheiten in Form von Vakuumkammern angeschlossen ist;
Fig. 13 und 14 vergrößerte Details T und U von Fig. 11 und Fig. 12;
Fig. 15 und 16 Schnitte analog Fig. 6 und Fig. 7 einer zweiten Ausführungsform eines Vakuumventils gemäß der Erfindung;
Fig. 17 und 18 Darstellungen analog Fig. 6 und Fig. 7 einer dritten Ausführungsform eines Vakuumventils gemäß der Erfindung;
Fig. 19 eine schematische Darstellung analog Fig. 9 einer vierten Ausführungsform eines Vakuumventils gemäß der Erfindung.

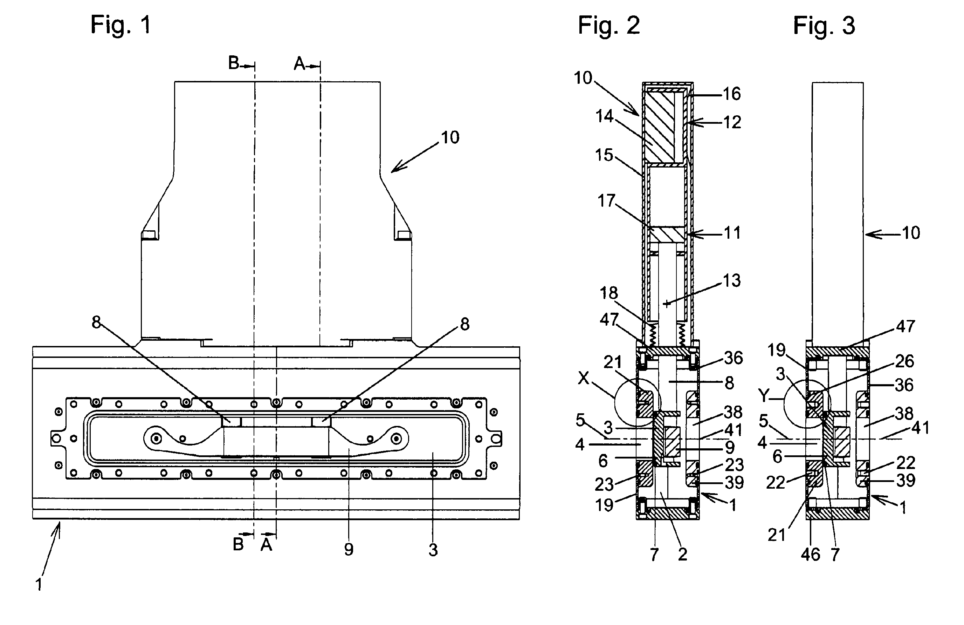

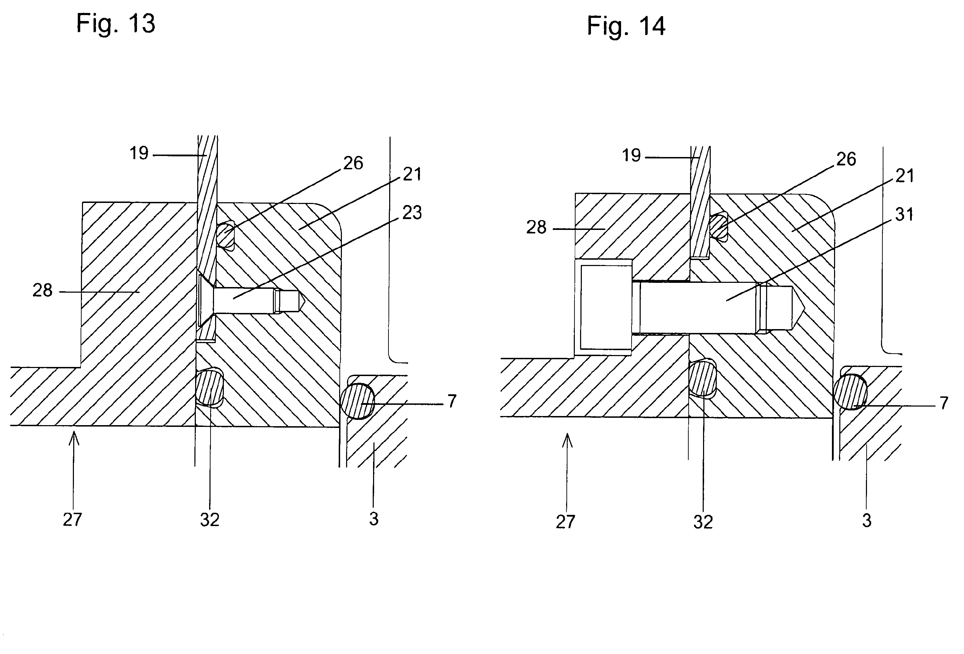

Eine erste Ausführungsform eines erfindungsgemäßen Vakuumventils ist in den Fig. 1 bis 14 dargestellt.

Das Vakuumventil weist ein Ventilgehäuse 1 auf, welches einen Innenraum 2 besitzt, in dem ein im Ausführungsbeispiel plattenförmiges Verschlussglied 3 angeordnet ist.

Im in den Figuren dargestellten geschlossenen Zustand des Vakuumventils wird eine Ventilöffnung 4 des Ventilgehäuses, die eine Achse 5 besitzt, vom Verschlussglied 3 verschlossen. Hierzu ist das Verschlussglied 3 an einen die Ventilöffnung 4 umgebenden Ventilsitz 6 angedrückt. Im gezeigten Ausführungsbeispiel ist am Verschlussglied 6 eine elastomere Dichtung 7 angeordnet, welche an einer Dichtfläche des Ventilsitzes 6 anliegt. In einer modifizierten Ausführungsform könnte die Dichtung auch am Ventilsitz 6 und die Dichtfläche am Verschlussglied 3 angeordnet sein.

Im geschlossenen Zustand des Vakuumventils nimmt das Verschlussglied 3 die in den Figuren dargestellte Schließstellung ein.

Im geöffneten Zustand des Vakuumventils wird die Ventilöffnung 4 vom Verschlussglied freigegeben, wobei das Verschlussglied seine Offenstellung einnimmt. Vorzugsweise überlappt das Verschlussglied 3 im geöffneten Zustand des Vakuumventils in Richtung der Achse 5 der Ventilöffnung 4 gesehen nicht mit der Ventilöffnung 4.

Das Verschlussglied 3 ist an Ventilstangen 8 angebracht. Im gezeigten Ausführungsbeispiel ist an den Ventilstangen 8 ein Querträger 9 befestigt, welcher wiederum am Verschlussglied 3 befestigt ist. Durch eine Torsion des Querträgers ist eine gewisse Verkippung des Verschlussgliedes 3 um eine rechtwinkelig zu den Ventilstangen 8 stehende Achse möglich, um im geschlossenen Zustand des Vakuumventils eine zumindest weitgehend gleichmäßige Verpressung der Dichtung 7 in einfacher Weise zu erreichen.

Das Öffnen und Schließen des Vakuumventils erfolgt durch eine Verstellung der Ventilstangen 8 mittels eines Ventilantriebes 10. Der Ventilantrieb 10 kann in unterschiedlicher Weise ausgebildet sein und ein oder mehrere Aktuatoren aufweisen, welche beispielsweise pneumatisch oder elektrisch betrieben werden.

Nur in Fig. 2 ist als Beispiel eine mögliche Ausbildung eines Ventilantriebes 10 schematisch dargestellt. Der Ventilantrieb umfasst eine ersten Aktuator 11 in Form einer Kolben-Zylinder-Einheit und eine zweiten Aktuator 12 in Form einer Kolben-Zylinder-Einheit. Die Zylinder dieser Aktuatoren 11, 12 sind starr miteinander verbunden und um eine rechtwinkelig zu den Ventilstangen 8 und zur Achse 5 der Ventilöffnung 4 stehende Schwenkachse 13 verschwenkbar, die nur schematisch angedeutet ist. Mittels des Kolbens 14 des zweiten Aktuators 12, der sich an einem Antriebsgehäuse 15 abstützt, können die miteinander verbundenen Zylinder der Aktuatoren 11, 12 gegen die Kraft einer Rückstellfeder 16 um die Schwenkachse 13 verschwenkt werden. Die am Kolben 17 des ersten Aktuators 11 angebrachte Kolbenstange ist mit den Ventilstangen verbunden oder bildet eine der Ventilstangen 8. Beispielsweise können für beide Ventilstangen 8 in der dargestellten Weise ausgebildete Aktuatoren 11, 12 vorgesehen sein, die synchron betrieben werden. Die Ventilstangen könnten beispielsweise auch über ein in Richtung der Schwenkachse 13 verlaufendes Joch mit der Kolbenstange eines gemeinsamen Aktuators 11 verbunden sein.

Die Ventilstangen 8 sind jeweils über einen Faltenbalg 18 vakuumdicht mit dem Ventilgehäuse 1 verbunden.

Wenn das Vakuumventil ausgehend vom dargestellten geschlossenen Zustand geöffnet werden soll, so wird zunächst der Zylinder des zweiten Aktuators 12 belüftet, sodass die Ventilstangen 8 von der Rückstellfeder 16 um die Schwenkachse 13 verschwenkt werden, wodurch sich das Verschlussglied 3 vom Ventilsitz 6 abhebt, hierbei aber die Ventilöffnung 4 in Richtung der Achse 5 gesehen nach wie vor überdeckt. In der Folge werden die Ventilstangen 8 mittels des ersten Aktuators 11 axial verstellt, sodass die Ventilöffnung 4 freigegeben wird.

Zum Schließen wird zunächst das Verschlussglied 3 mittels des Aktuators 11 in die die Ventilöffnung 4 in Richtung der Achse 5 gesehen überdeckende, aber vom Ventilsitz 6 abgehobene Stellung verstellt. In der Folge werden die Ventilstangen 8 mittels des zweiten Aktuators 12 um die Schwenkachse 13 verstellt, sodass das Verschlussglied 3 an den Ventilsitz 6 angedrückt wird.

Ein Ventil, das in einer solchen Weise geschlossen und geöffnet wird, kann auch als L-Ventil bezeichnet werden. Anstelle einer geradlinigen Verschiebung in Verbindung mit einer Verschwenkung um die Schwenkachse 13 kann eine L-Bewegung auch in Form von zwei rechtwinkelig zueinander verlaufenden geradlinigen Bewegungen erfolgen, wie dies bekannt ist. Ein erfindungsgemäßes Ventil kann auch mit einer anderen Öffnungs- und Schließbewegung betrieben sein.

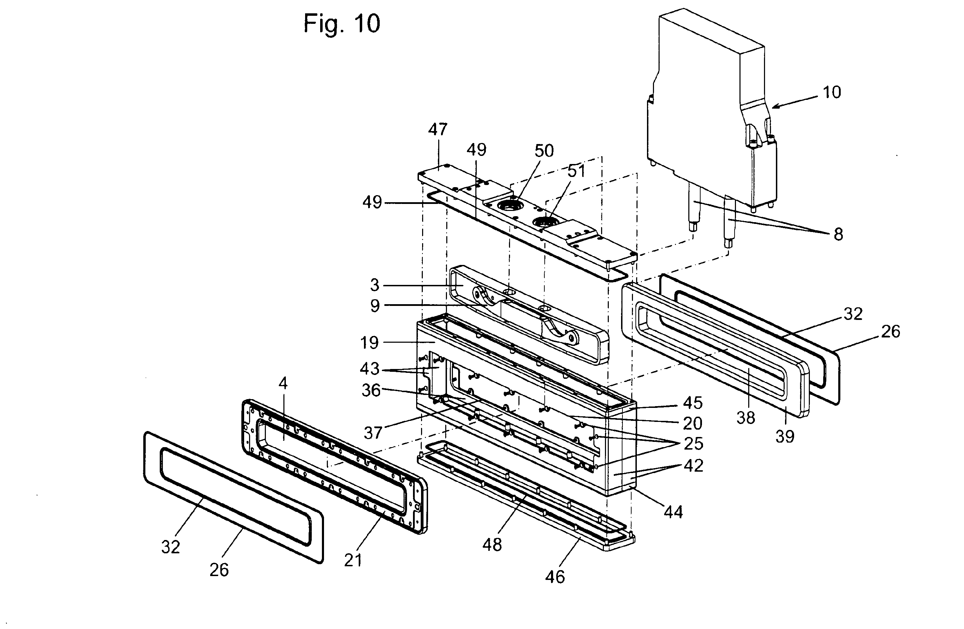

Das Ventilgehäuse 1 weist eine, im Ausführungsbeispiel ebene, erste Gehäusewand 19 mit einer Fensterausnehmung 20 (vgl. Fig. 10) auf. Die Ventilöffnung 4 liegt im Bereich der Fensterausnehmung 20, ist aber kleiner als diese. Die erste Gehäusewand besteht aus Blech. Die Dicke des Blechs beträgt weniger als 5mm, vorzugsweise weniger als 4mm, wobei ein Wert von weniger als 3mm besonders bevorzugt ist. Vorteilhafterweise beträgt die Dicke des Blechs mehr als 1 mm. Es handelt sich insbesondere um ein Stahlblech.

Die Ventilöffnung 4 wird von der Ringöffnung eines ersten Flanschrings 21 gebildet, d.h. der Flanschring begrenzt die Ventilöffnung 4 über ihren gesamten Umfang.

In Richtung der Achse 5 des Ventilgehäuses 1 gesehen ragt der Flanschring in den Bereich der Fensterausnehmung 20 der Gehäusewand 19 hinein, und zwar über den gesamten Umfang des Flanschrings 21.

In Richtung der Achse 5 der Ventilöffnung 4 auf die Außenseite der Gehäusewand 19 gesehen, liegt der Flanschring 21 mit einem an seinen äußeren Umfang anschließenden Abschnitt über seinen gesamten Umfang hinter der Gehäusewand 19. Die auf die Achse 5 bezogene radiale Erstreckung des Flanschrings 21 nach außen ist somit über den gesamten Umfang des Flanschrings 21 größer als die entsprechende Erstreckung der Fensterausnehmung 20.

Mit anderen Worten stützt sich der Flanschring an seiner vom Verschlussglied 3 abgewandten, d.h. dem Ventilsitz 6 gegenüberliegenden, Seite an der Gehäusewand 19 ab und zwar über einen die Fensterausnehmung 20 der Gehäusewand 19 vollständig umgebenden Abstützbereich der Gehäusewand 19. Mit diesem ringförmigen Abstützbereich der Gehäusewand 19 wirkt ein ringförmiger Abstützbereich des Flanschrings 21 zusammen. Bezogen auf die radiale Richtung zur Achse 5 der Ventilöffnung 4 überlappen die Gehäusewand 19 und der Flanschring 21 über ihre Abstützbereiche.

Der Flanschring 21 weist an seiner der Gehäusewand 19 zugewandten Seite eine Vertiefung auf, in welcher der Abstützbereich der Gehäusewand 19 liegt. Die Vertiefung schließt an den äußeren Umfang des Flanschrings 21 an. Im Ausführungsbeispiel entspricht die in Richtung der Achse 5 gemessene Tiefe der Vertiefung zumindest im Wesentlichen der Dicke des Blechs der Gehäusewand 19. Günstigerweise beträgt die Abweichung der Tiefe der Vertiefung von der Dicke des Blechs der Gehäusewand 19 weniger als 30% der Dicke des Blechs der Gehäusewand 19.

Der Flanschring 21 ist massiv ausgebildet. Seine auf die Richtung der Achse 5 der Ventilöffnung 4 bezogene Dicke (=Erstreckung zwischen seinen axialen Oberflächen) beträgt über seine gesamte Ausdehnung mehr als 5mm, vorzugsweise mehr als 1 cm, wobei ein Wert von mehr als 1,5cm besonders bevorzugt ist.

Bezogen auf die Richtung der Achse 5 der Ventilöffnung 4 beträgt die Dicke des Flanschrings 21 mehr als das Dreifache, vorzugsweise mehr als das Fünffache der Dicke der Gehäusewand 19.

Die auf die radiale Richtung zur Achse 5 der Ventilöffnung 4 bezogene Materialstärke des Flanschrings 21 (=Erstreckung zwischen seinen radialen Oberflächen) beträgt über seinen gesamten Umfang mehr als 1 cm, vorzugsweise mehr als 2cm.

Der Flanschring 21 besitzt in Form von Sacklochbohrungen ausgebildete Gewindebohrungen 22. Die Gewindebohrungen gehen von der zur Außenseite des Ventilgehäuses 1 gerichteten Oberfläche des Flanschrings 21 aus (liegen also auf der dem Ventilsitz 6 gegenüberliegenden Seite des Flanschrings 21). Die Gewindebohrungen 22 liegen hierbei in einem Bereich des Flanschrings 21, der in Richtung der Achse 5 der Ventilöffnung 4 gesehen im Bereich der Fensterausnehmung 20 liegt. Die Gewindebohrungen 22 könnten aber auch radial außerhalb der Fensterausnehmung 20 liegen, wobei die Gehäusewand 19 dann entsprechende Bohrungen aufweisen würde, durch welche die Gewindebohrungen 22 zugänglich wären.

An seiner zum Innenraum 2 des Ventilgehäuses 1 gerichteten axialen Oberfläche bildet der Flanschring 21 den Ventilsitz 6 aus. Im Ausführungsbeispiel weist er hierzu eine Dichtfläche auf, an welcher im geschlossenen Zustand des Vakuumventils die Dichtung 7 anliegt. Die Dichtung könnte aber auch am Flanschring angeordnet sein, beispielsweise in einer Nut oder anvulkanisiert, und das Verschlussglied 3 könnte eine mit der Dichtung zusammenwirkende Dichtfläche aufweisen.

Der Flanschring 21 ist über Halterungsschrauben 23 mit der Gehäusewand 19 verbunden. Hierzu besitzt der Flanschring 21 an seiner dem Ventilsitz 6 gegenüberliegenden Seite Gewindebohrungen 24, die in Form von Sacklochbohrungen ausgebildet sind und mit Löchern 25 in der Gehäusewand 19 fluchten. Die Halterungsschrauben 23 werden durch die Löcher 25 in die Gewindebohrungen 24 eingeschraubt, wobei ihr Kopf jeweils an einem das jeweilige Loch 25 umgebenden Bereich an der Außenseite der Gehäusewand 19 anliegt.

Die Längserstreckungen der Halterungsschrauben 23 liegen parallel zur Achse 5 der Ventilöffnung 4.

Im Ausführungsbeispiel ist zwischen der Gehäusewand 19 und dem Flanschring 21 ein elastomerer Dichtring 26 angeordnet, der bezogen auf die Achse 5 radial außerhalb der Halterungsschrauben 23 liegt. Der Dichtring 26 kann hierbei wie dargestellt in einer Nut des Flanschrings angeordnet sein. Beispielsweise könnte auch ein an den Flanschring 21 oder die Gehäusewand 19 anvulkanisierter Dichtring vorgesehen sein.

In modifizierten Ausführungsformen kann der Dichtring 26 auch entfallen (siehe weiter unten).

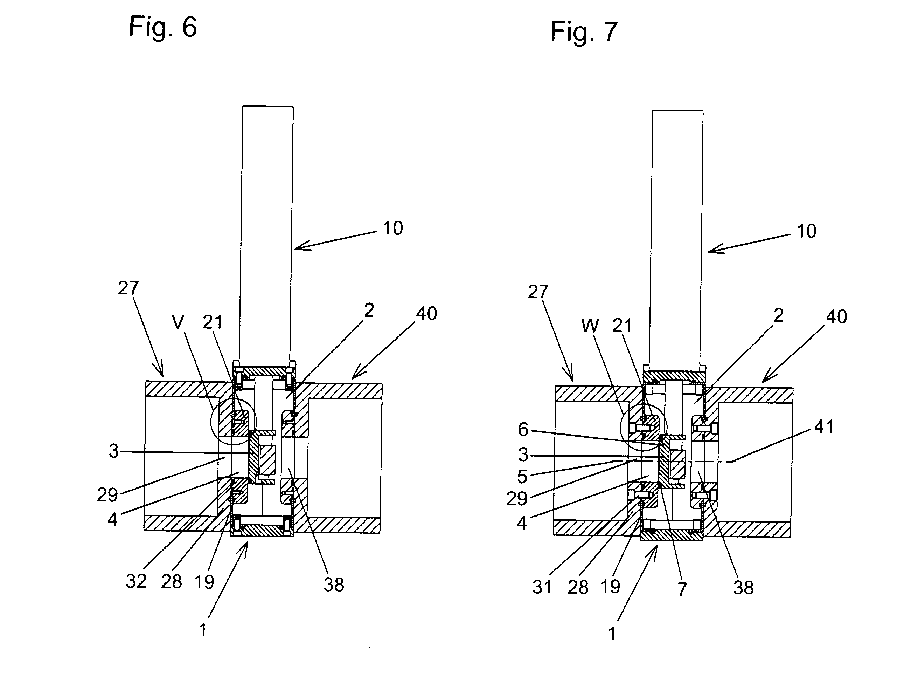

Der vakuumdichte Anschluss des Vakuumventils an eine Vakuumeinheit 27, wobei der Innenraum 2 des Ventilgehäuses 1 über die Ventilöffnung 4 mit einem Innenraum der Vakuumeinheit 27 kommuniziert, erfolgt über den Flanschring 21. Bei der Vakuumeinheit 27 handelt es sich beispielsweise um eine Vakuumkammer. Es könnte sich beispielsweise auch um eine Rohrleitung handeln. Die Vakuumeinheit 27 besitzt zur Verbindung mit dem Flanschring 21 einen Anschlussflansch 28. Im in den Fig. 6 bis 9 dargestellten Ausführungsbeispiel wird der Anschlussflansch 28 von der die Öffnung 29 aufweisenden Seitenwand der Vakuumeinheit 27 gebildet. Hierzu besitzt diese Seitenwand Durchgangsbohrungen 30 zum Durchstecken von Verbindungsschrauben 31, welche in die Gewindebohrungen 22 des Flanschrings 21 eingeschraubt werden. Der Kopf einer jeweiligen Verbindungsschraube 31 stützt sich an einer innenraumseitigen Oberfläche des Anschlussflansches 28 ab.

Die Längserstreckungen der Verbindungsschrauben 31 liegen parallel zur Achse 5 der Ventilöffnung 4.

Zwischen dem Anschlussflansch 28 und dem Flanschring 21 ist eine ringförmige Dichtung 32 aus einem elastomeren Material angeordnet. Die Dichtung 32 liegt bezogen auf die Achse 5 radial innerhalb der Verbindungsschrauben 31 und dichtet den Flanschring 21 gegenüber dem Anschlussflansch 28 ab. Beispielsweise ist die Dichtung 32 in einer Nut des Flanschrings 21 angeordnet und liegt an einer Dichtfläche des Anschlussflansches 28 an. Die Dichtung 32 könnte auch in einer Nut des Anschlussflansches 28 angeordnet sein oder am Flanschring 21 oder am Anschlussflansch 28 anvulkanisiert sein. Auch an beiden Teilen 21, 28 könnten Dichtungen angeordnet sein, welche jeweils an einer Dichtfläche des anderen Teils anliegen.

Weiters ist zwischen der Gehäusewand 19 und dem Anschlussflansch 28 ein elastomerer Dichtring 33 angeordnet, der im an die Vakuumeinheit 27 angeschlossenen Zustand des Vakuumventils die Gehäusewand 19 gegenüber dem Anschlussflansch 28 abdichtet. Der Dichtring 33 liegt bezogen auf die Achse 5 radial außerhalb der Verbindungsschrauben 31 und radial außerhalb der Halterungsschrauben 23. Beispielsweise ist der Dichtring 33 in einer Nut des Anschlussflansches 28 angeordnet. Er könnte auch am Anschlussflansch oder der Gehäusewand 19 anvulkanisiert sein.

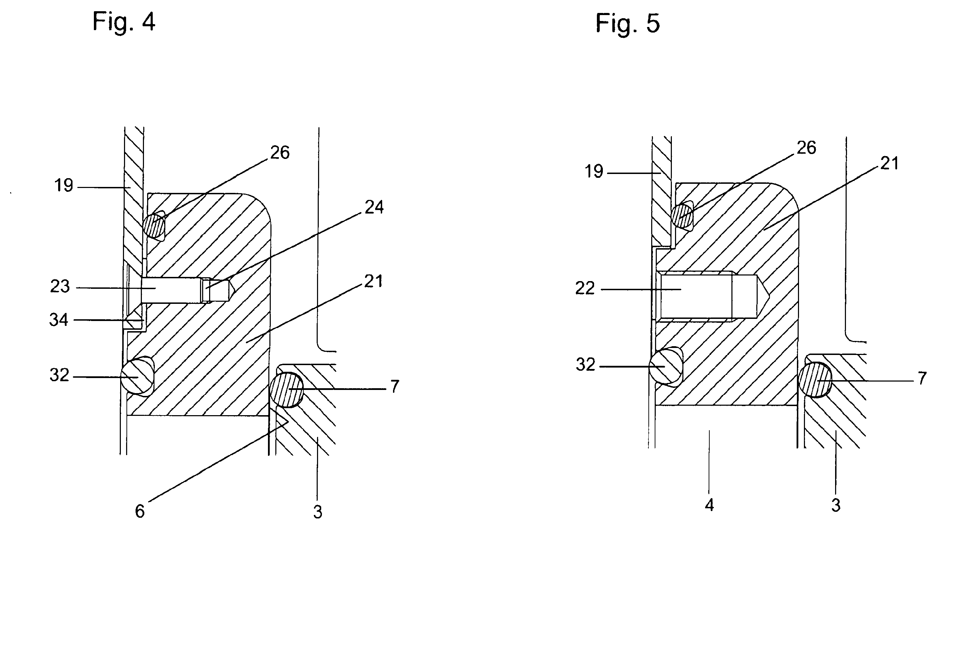

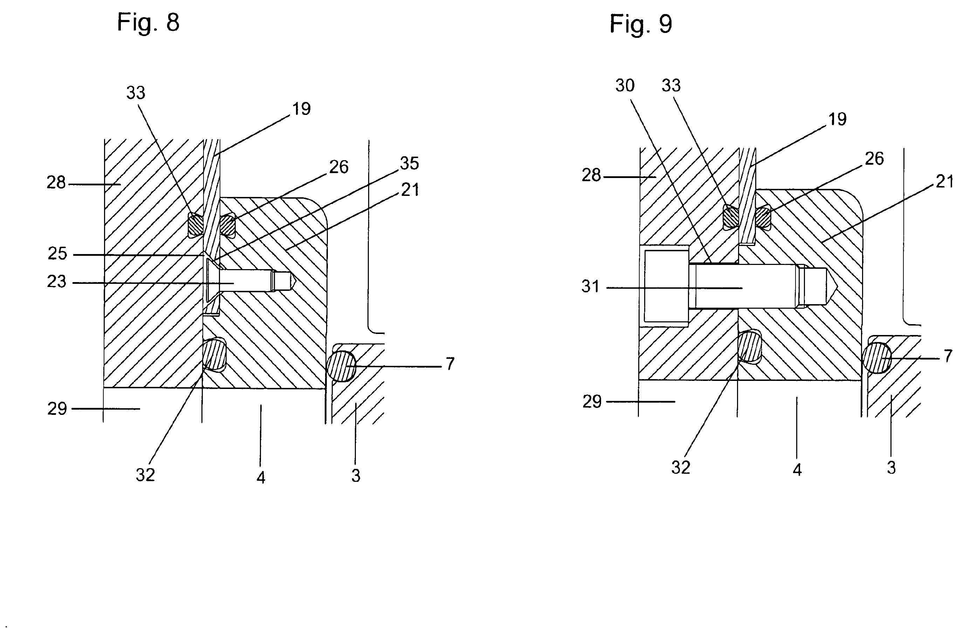

Im mit der Vakuumeinheit 27 verbundenen Zustand des Vakuumventils wird die Gehäusewand 19 gegenüber dem Flanschring 21 durch den Dichtring 26 abgedichtet. Die erforderliche Anpresskraft des Flanschrings 21 an die Gehäusewand 19 kann hierbei durch die Verbindungsschrauben 31 aufgebracht werden. Die Halterungsschrauben 23 allein würden in diesem Fall zu keiner ausreichenden Verpressung des Dichtrings 26 führen. Aus den Fig. 4 und 5 ist ersichtlich, dass zwischen dem Flanschring 21 und der Gehäusewand 19 im Bereich um den Dichtring 26 ein Spalt 34 vorliegt, wenn das Vakuumventil nicht über den Flanschring 21 an die Vakuumeinheit 27 angeschlossen ist. Aus den Fig. 8 und 9 ist ersichtlich, dass dieser Spalt 34 im an die Vakuumeinheit 27 angeschlossenen Zustand durch die Verbindungsschrauben 31 geschlossen ist. Es liegt dann ein entsprechender Spalt 35 zwischen dem Kopf der jeweiligen Halterungsschraube 23 und der Gehäusewand 19 vor. D.h. die Halterungsschrauben 23 sind im an die Vakuumeinheit 27 über den Flanschring 21 und die Verbindungsschrauben 31 angeschlossenen Zustand des Vakuumventils funktionslos.

Andererseits ist es auch grundsätzlich denkbar und möglich, dass allein die Halterungsschrauben 23 den Dichtring 26 ausreichen verpressen und den Spalt 34 schließen. Die Halterungsschrauben 23 müssen hierzu ausreichend stark ausgelegt werden und eine ausreichende Anzahl von Halterungsschrauben 23 muss hierzu vorgesehen werden.

Im an die Vakuumeinheit 27 angeschlossenen Zustand des Vakuumventils ist die Gehäusewand 19 zwischen dem Flanschring 21 und dem Anschlussflansch 28 durch die Schraubverbindungen zwischen diesen beiden Teilen geklemmt. Die Klemmung erfolgt hierbei im Bereich des bezogen auf die Achse 5 radialen Überlapps dieser Teile. Wenn sich der Anschlussflansch 28 bezogen auf die radiale Richtung mindestens über den an die Fensterausnehmung 20 der Gehäusewand 19 anschließenden Abstützbereich der Gehäusewand 19 erstreckt, über welchen sich der Flanschring 21 an der Gehäusewand 19 abstützt, erfolgt die Klemmung über diesen Abstützbereich der Gehäusewand 19.

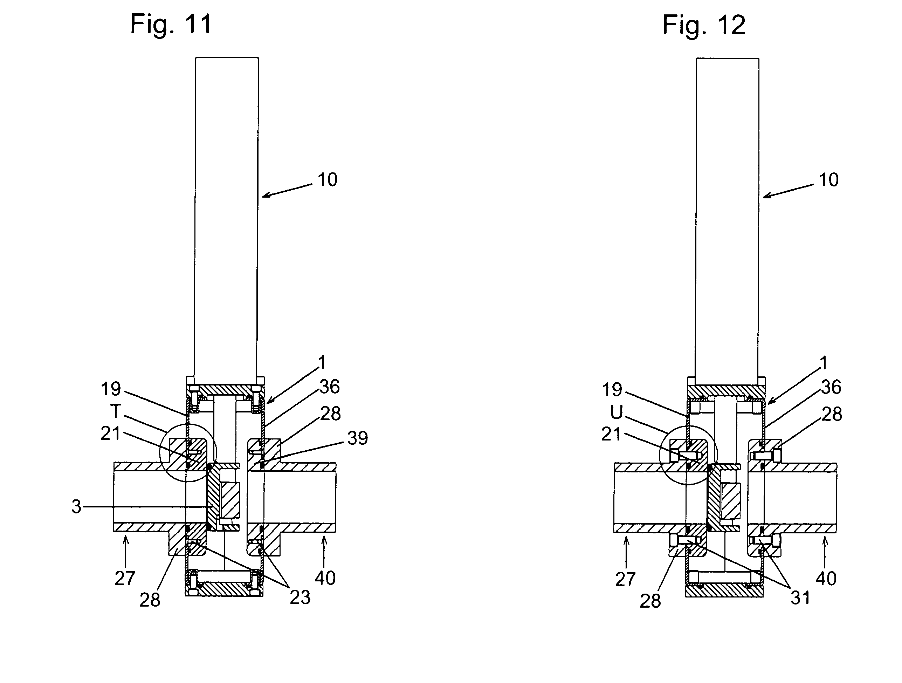

Im in den Fig. 11 und 12 gezeigten Beispiel des Anschlusses ist das Vakuumventli über den Flanschring 21 mit einer Vakuumeinheit 27 verbunden, welche einen radial nach außen nach Art eines Ringbundes abstehenden Anschlussflansch 28 aufweist. Die Verbindungsschrauben 31, welche wiederum Durchgangsbohrungen 30 durch den Anschlussflansch 28 durchsetzen und in die Gewindebohrungen 22 des Flanschrings 21 eingeschraubt sind, liegen hier außerhalb des Vakuumbereichs (während sie im in den Fig. 6 bis 9 dargestellten Beispiel des Anschlusses innerhalb des Vakuumbereichs liegen). Entsprechend ist keine Abdichtung zwischen dem Anschlussflansch 28 und der Gehäusewand 19 erforderlich und der in den Fig. 6 bis 9 gezeigte Dichtring 33 kann entfallen. Im Übrigen ist die Verbindung zwischen dem Vakuumventil und der Vakuumeinheit 27 gleich wie zuvor beschrieben.

Das Ventilgehäuse 1 weist zusätzlich zur ersten Gehäusewand 19 eine der ersten Gehäusewand 19 gegenüberliegende, im Ausführungsbeispiel ebene zweite Gehäusewand 36 aus Blech auf. Die Gehäusewand 36 besitzt eine Fensterausnehmung 37, im Bereich von der eine zweite Ventilöffnung 38 des Ventilgehäuses 1 liegt. Die zweite Ventilöffnung 38 wird von einem massiven zweiten Flanschring 39 über ihren gesamten Umfang begrenzt. Der zweite Flanschring 39 dient zum vakuumdichten Anschluss des Vakuumventils an eine weitere Vakuumeinheit 40, wobei der Innenraum 2 des Ventilgehäuses 1 über die zweite Ventilöffnung 38 mit dem Innenraum der Vakuumeinheit 40 kommuniziert.

Die Achse 41 der zweiten Ventilöffnung 38 stimmt im gezeigten Ausführungsbeispiel mit der Achse 5 der ersten Ventilöffnung 4 überein. In anderen Ausführungsbeispielen könnten diese Achsen auch parallel zueinander ausgerichtet, aber versetzt zueinander sein, oder auch winkelig zueinander ausgerichtet sein.

Im gezeigten Ausführungsbeispiel entspricht die Form und Größe der zweiten Ventilöffnung 38 der Form und Größe der ersten Ventilöffnung 4. Auch unterschiedliche Ausbildungen in der Form und/oder Größe sind denkbar und möglich.

Von diesem zweiten Flanschring 39 wird in diesem Ausführungsbeispiel kein Ventilsitz für das Verschlussglied 3 ausgebildet. Abgesehen von diesem Unterschied entsprechen die Ausbildung des zweiten Flanschrings 39, der zweiten Gehäusewand 36, ihrer gegenseitigen Verbindung über Halterungsschrauben 23 und der Verbindung mit der weiteren Vakuumeinheit 40 über Verbindungsschrauben 31 identisch der vorausgehenden Beschreibung im Zusammenhang mit der ersten Gehäusewand 19, dem ersten Flanschring 21 und deren Verbindung untereinander und mit der Vakuumeinheit 27. Es wird daher an dieser Stelle auf eine Wiederholung verzichtet.

Zwischen den ersten und zweiten Gehäusewänden 19, 36, die auch als vordere und hintere Gehäusewand des Ventilgehäuses 1 bezeichnet werden könnten, verlaufen Seitenwände 42, 43 des Ventilgehäuses 1, die den Innenraum 2 auf gegenüberliegenden Seiten begrenzen. Diese Seitenwände 42, 43 sind im Ausführungsbeispiel ebenfalls aus Blech ausgebildet. Beispielsweise können Bleche, welche die Gehäusewände 19, 36 bilden, umgebogene Enden aufweisen, welche jeweils einen Teil der jeweiligen Seitenwand 42, 43 bilden. Die aneinander anstoßenden Ränder der umgebogenen Abschnitte sind miteinander verschweißt.

An die miteinander verbundenen Gehäusewände 19, 36 und Seitenwände 42, 43 sind obere und untere Flanschteile 44, 45 aus Blech angeschweißt, mit denen ein massives Bodenteil 46 und ein massives Deckelteil 47 des Ventilgehäuses 1 verschraubt werden. Beispielsweise weisen die Flanschteile 44, 45 hierzu Schraubhülsen auf. Zwischen dem Flanschteil 44 und dem Bodenteil 46 und zwischen dem Flanschteil 45 und dem Deckelteil 47 ist zur Abdichtung des Innenraums 2 des Ventilgehäuses 1 jeweils ein elastomerer Dichtring 48, 49 angeordnet.

Durch Öffnungen 50, 51 des Deckelteils 47 sind die Ventilstangen 8 abgedichtet herausgeführt, beispielsweise mittels elastomeren Dichtringen oder mittels Faltenbälgen.

Wenn zuvor angeführt worden ist, dass eine Verbindung zwischen dem Vakuumventil und einer Vakuumeinheit vakuumdicht ist, so soll dies so verstanden werden, dass im Innenraum 2 des Ventilgehäuses zumindest über mehr als eine Stunde zumindest ein Druck von unter 10⁻³mBar aufrechterhalten werden kann. Hierbei wird für den Innenraum der Vakuumeinheit, der mit dem Innenraum 2 des Ventilgehäuses 1 kommuniziert, das gleiche Volumen angesetzt, welches der Innenraum 2 des Ventilgehäuses 1 aufweist und die andere Ventilöffnung soll durch einen Blindflansch leckfrei geschlossen sein.

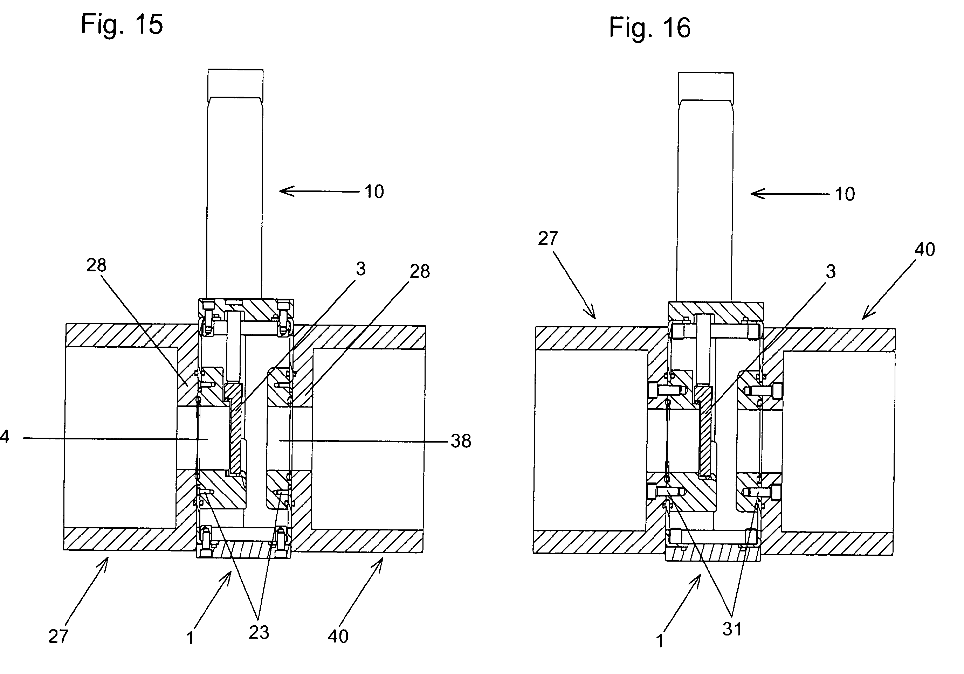

Aus den Fig. 15 und 16 geht eine zweite Ausführungsform für ein Vakuumventil gemäß der Erfindung hervor. Das Vakuumventil entspricht dem in den Fig. 1 bis 14 dargestellten Vakuumventil abgesehen von folgenden Unterschieden:
Das Verschlussglied 3 wird hier von seiner Offenstellung im geöffneten Zustand des Vakuumventils in seine Schließstellung im geschlossenen Zustand des Vakuumventils geradlinig verfahren. Hierzu wird die mindestens eine Ventilstange 8, an der das Verschlussglied 3 angebracht ist, vom Ventilantrieb 10 geradlinig in Richtung ihrer Längsachse verschoben. Der Ventilantrieb 10 kann beispielsweise von einer einzelnen Kolben-Zylinder-Einheit gebildet werden, deren Kolbenstange mit der mindestens einen Ventilstange 8 verbunden ist oder die Ventilstange 8 bildet. Die am Verschlussglied 3 angeordnete Dichtung und die am Ventilsitz 6 angeordnete Dichtfläche weisen hier eine dreidimensionale Form auf. Die Dichtung könnte auch am Ventilsitz 6 und die Dichtfläche am Verschlussglied 3 angeordnet sein. Vakuumventile mit in dieser Form ausgebildeten Verschlussgliedern und Ventilsitzen sind bekannt, beispielsweise aus dem eingangs genannten Stand der Technik.

Die Verbindungen mit den Vakuumeinheiten 27, 40 erfolgen gleich wie anhand der ersten Ausführungsform des erfindungsgemäßen Vakuumventils beschrieben.

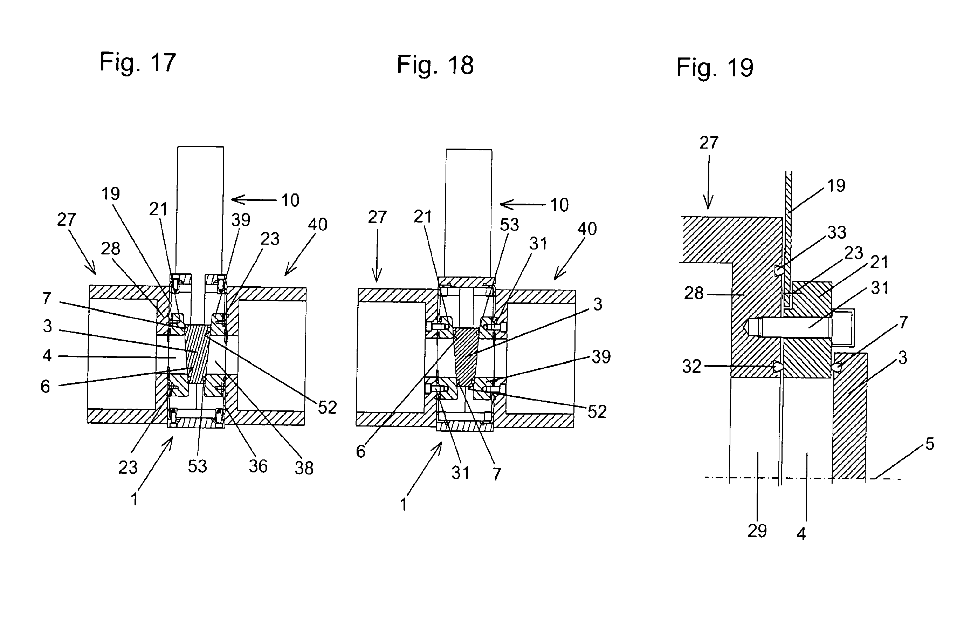

Die Fig. 17 und 18 zeigen eine dritte Ausführungsform für ein Vakuumventil gemäß der Erfindung. Abgesehen von den im Folgenden beschriebenen Unterschieden ist die Ausbildung gleich wie anhand der ersten Ausführungsform beschrieben. Analog zur zweiten Ausführungsform erfolgt die Verstellung des Verschlussgliedes 3 zwischen seiner Offenstellung und seiner Schließstellung geradlinig, indem die mindestens eine Ventilstange 8 vom Ventilantrieb 10 in axialer Richtung verschoben wird. Das Verschlussglied 3 besitzt hier eine im Querschnitt keilförmige Ausbildung.

Ein mit der ersten Gehäusewand 19 zusammenwirkender erster Flanschring 21 begrenzt eine erste Ventilöffnung 4 und ein mit der zweiten Gehäusewand 36 zusammenwirkender zweiter Flanschring 39 begrenzt eine zweite Ventilöffnung 38. Der erste Flanschring 21 weist einen ersten Ventilsitz 6 auf, an den das Verschlussglied 3 im geschlossenen Zustand des Vakuumventils an seiner ersten Seite angelegt ist. Der zweite Flanschring 39 weist einen zweiten Ventilsitz 52 auf, an den das Verschlussglied 3 im geschlossenen Zustand des Vakuumventils an seiner der ersten Seite gegenüberliegenden zweiten Seite angelegt ist. Im gezeigten Ausführungsbeispiel werden die ersten und zweiten Ventilsitze 6, 52 von einer Dichtfläche des jeweiligen Flanschrings 21, 39 gebildet und das Verschlussglied 3 liegt im geschlossenen Zustand des Vakuumventils mit ersten und zweiten an ihm angeordneten elastomere Dichtungen 7, 53 an der jeweiligen Dichtfläche an. Auch eine umgekehrte Ausbildung ist wiederum möglich, bei der das Verschlussglied 3 die erste und zweite Dichtfläche und der jeweilige Ventilsitz 6, 52 eine die jeweilige Ventilöffnung 4, 38 umgebende elastomere Dichtung aufweist.

Die erste und zweite Seite des Verschlussgliedes 3 und der erste und zweite Ventilsitz 6, 52 liegen schräg zu den Achsen 5, 41 der Ventilöffnungen 4, 38, wobei sie gegenüber einer rechtwinkelig zu den Achsen 5, 41 stehenden Ebene in entgegengesetzte Richtungen geneigt sind.

Wenn das Verschlussglied 3 mittels des Ventilantriebes 10 in seine Schließstellung verfahren worden ist, so kann vorgesehen sein, dass die Dichtungen 7, 53 auch ohne einen zwischen den Vakuumeinheiten 27, 40 vorliegenden Differenzdruck verpresst sind. Es kann aber auch vorgesehen sein, dass die elastomeren Dichtungen 7, 53 nur leicht an die Dichtflächen angelegt sind und eine Verpressung der Dichtungen erst bei einem vorliegenden Differenzdruck erfolgt.

Eine solche Ausbildung ist bekannt, beispielsweise aus dem eingangs genannten Stand der Technik.

Im Übrigen ist das Vakuumventil gemäß dieser Ausführungsform und seine Verbindung mit den Vakuumeinheiten 27, 40 identisch wie im Zusammenhang mit der ersten Ausbildungsform des Vakuumventils beschrieben.

Fig. 19 zeigt einen Ausschnitt einer vierten Ausführungsform eines Vakuumventils gemäß der Erfindung. Es kann sich hierbei um eine Modifikation der zuvor beschriebenen ersten Ausführungsform handeln.

Die Modifikation besteht darin, dass der Flanschring 21 zur Herstellung einer Schraubverbindung mit einer Vakuumeinheit 27 Durchgangsbohrungen 54 aufweist. Der Anschlussflansch 28 der Vakuumeinheit 27, an welche das Vakuumventil mit seiner Ventilöffnung 4 angeschlossen ist, weist Gewindebohrungen 55 auf. Diese sind in Form von Sacklochbohrungen ausgebildet und gehen von der dem Flanschring 21 zugewandten Oberfläche des Anschlussflansches 28 aus. Vom Innenraum 2 des Ventilgehäuses 1 her werden Verbindungsschrauben 31 durch die Durchgangsbohrungen 54 in die Gewindebohrungen 55 des Anschlussflansches 28 eingeschraubt. Köpfe der Verbindungsschrauben 31 stützen sich hierbei an einer zum Innenraum 2 gerichteten Oberfläche des Flanschrings 21 ab.

Zwischen dem Flanschring 21 und dem Anschlussflansch 28 liegt wiederum mindestens eine Dichtung 32. Diese kann am Anschlussflansch 28 oder am Flanschring 21 angeordnet sein und dichtet diese beiden Teile im über die Verbindungsschrauben 31 verbundenen Zustand gegeneinander ab.

Die mindestens eine Dichtung 32 liegt radial innerhalb der Verbindungsschrauben 31.

Wie in den zuvor beschriebenen Ausführungsbeispielen ist der Flanschring 21 über Halterungsschrauben 23 mit der Gehäusewand 19 verbunden, was in Fig. 19 nur schematisch dargestellt ist. Ein Dichtring zwischen der Gehäusewand 19 und dem Flanschring 21 kann in diesem Ausführungsbeispiel aber entfallen.

Im mit der Vakuumeinheit 27 verbundenen Zustand des Vakuumventils ist der Anschlussflansch 28 gegenüber der Gehäusewand 19 über mindestens einen Dichtring 33 abgedichtet. Dieser liegt radial außerhalb der Halterungsschrauben 23. Der Dichtring 33 kann am Anschlussflansch 28 oder an der Gehäusewand 19 angeordnet sein.

Die Verbindungsschrauben 31 liegen somit bei diesem Ausführungsbeispiel in dem Innenraum des Ventilgehäuses 1 zugeordneten Vakuumbereich.

Im Übrigen kann das Vakuumventil gleich wie in den Fig. 1 bis 12 dargestellt ausgebildet sein.

Auch der Bereich der zweiten Gehäusewand 36 mit dem zweiten Flanschring 39 und die Verbindung mit der zweiten Vakuumeinheit 40 kann entsprechend der Darstellung von Fig. 19 ausgebildet sein. Auch könnte bei einer solchen Ausbildung dieser Komponenten das Vakuumventil im Bereich der ersten Gehäusewand und des ersten Flanschrings 21 und der Verbindung mit der ersten Vakuumeinheit 27 in der in den Fig. 1 bis 14 dargestellten Weise ausgebildet sein.

Auch die anderen beschriebenen Ausführungsformen können in analoger Weise wie in Fig. 19 dargestellt modifiziert werden.

Bei der in Fig. 19 dargestellten Ausführungsform könnte der Dichtring 33 auch entfallen und stattdessen könnte ein zwischen dem Flanschring 21 und dem Verbindungsflansch 28 liegender Dichtring, der radial außerhalb der Verbindungsschrauben 31 liegt, und ein zwischen dem Flanschring 21 und der Gehäusewand 19 angeordneter Dichtring, der radial außerhalb der Halterungsschrauben 23 liegt, vorgesehen sein.

Die in Fig. 19 dargestellte Ausführungsform könnte auch dahingehend modifiziert werden, dass analog wie in den Fig. 11 bis 14 ein nach außen ringbundartig abstehender Anschlussflansch 28 vorhanden ist.

Weitere Modifikationen der gezeigten Ausführungsbeispiele sind denkbar und möglich, ohne den Bereich der Erfindung zu verlassen. So kann die Erfindung beispielsweise auch bei Vakuumventilen eingesetzt werden, welche ein beim Schließen auseinanderspreizbares Verschlussglied aufweisen. Auch die Abdichtung zwischen dem Flanschring, der Gehäusewand, mit welcher der Flanschring zusammenwirkt, und dem Anschlussflansch, mit dem der Flanschring verbunden wird, kann durch modifizierte Anordnungen von Dichtungen erfolgen, beispielsweise dann, wenn die Verbindungsschrauben auch Durchtrittsöffnungen durch die Gehäusewand durchsetzen.

Da die Halterungsschrauben 23 im an den Anschlussflansch 28 angeschlossenen Zustand des Flanschrings 21, 39 funktionslos sind, könnten solche Halterungsschrauben grundsätzlich auch entfallen. Bei der Montage müsste dann der Flanschring zunächst manuell entsprechend positioniert werden.

### Legende zu den Hinweisziffern:

- 1: Ventilgehäuse
- 2: Innenraum
- 3: Verschlussglied
- 4: Ventilöffnung
- 5: Achse
- 6: Ventilsitz
- 7: Dichtung
- 8: Ventilstange
- 9: Querträger
- 10: Ventilantrieb
- 11: erster Aktuator
- 12: zweiter Aktuator
- 13: Schwenkachse
- 14: Kolben
- 15: Antriebsgehäuse
- 16: Rückstellfeder
- 17: Kolben
- 18: Faltenbalg
- 19: Gehäusewand
- 20: Fensterausnehmung
- 21: Flanschring
- 22: Gewindebohrung
- 23: Halterungsschraube
- 24: Gewindebohrung
- 25: Loch
- 26: Dichtring
- 27: Vakuumeinheit
- 28: Anschlussflansch
- 29: Öffnung
- 30: Durchgangsbohrung
- 31: Verbindungsschraube
- 32: Dichtung
- 33: Dichtring
- 34: Spalt
- 35: Spalt
- 36: Gehäusewand
- 37: Fensterausnehmung
- 38: Ventilöffnung
- 39: Flanschring
- 40: Vakuumeinheit
- 41: Achse
- 42: Seitenwand
- 43: Seitenwand
- 44: Flanschteil
- 45: Flanschteil
- 46: Bodenteil
- 47: Deckelteil
- 48: Dichtring
- 49: Dichtring
- 50: Öffnung
- 51: Öffnung
- 52: Ventilsitz
- 53: Dichtung
- 54: Durchgangsbohrung
- 55: Gewindebohrung

## Patentansprüche

1. Vakuumventil umfassend ein Verschlussglied (3) und ein Ventilgehäuse (1) mit einer Ventilöffnung (4) und mit einem Innenraum (2), in dem das Verschlussglied (3) angeordnet ist, welches im geschlossenen Zustand des Vakuumventils an einem die Ventilöffnung (4) umgebenden Ventilsitz (6) anliegt, wobei das Ventilgehäuse (1) eine den Innenraum (2) begrenzende Gehäusewand (19) aus Blech aufweist, welche zur Ausbildung der Ventilöffnung (4) mit einer Fensterausnehmung (20) versehen ist, und wobei die Ventilöffnung (4) von einem Flanschring (21) umgeben ist, der über Schraubverbindungen mit einem Anschlussflansch (28) einer einen Innenraum aufweisenden Vakuumeinheit (27) verbindbar ist, an welche das Vakuumventil anschließbar ist, **dadurch gekennzeichnet, dass** der Flanschring (21) den Ventilsitz (6), an den das Verschlussglied (3) im geschlossenen Zustand des Vakuumventils angelegt ist, aufweist.

2. Vakuumventil nach Anspruch 1, **dadurch gekennzeichnet, dass** der Flanschring (21) zur Verbindung mit dem Anschlussflansch (28) der Vakuumeinheit (27) Gewindebohrungen (22) zum Einschrauben von Verbindungsschrauben (31) oder Durchgangsbohrungen (54) zum Durchstecken von Verbindungsschrauben (31) aufweist.

3. Vakuumventil nach Anspruch 1 oder 2, **dadurch gekennzeichnet, dass** der Flanschring (21) sich an seiner dem Ventilsitz (6) gegenüberliegenden Seite an der Gehäusewand (19) in einem an die Fensterausnehmung (20) der Gehäusewand (19) anschließenden, die Fensterausnehmung (20) umgebenden Abstützbereich der Gehäusewand (19) abstützt.

4. Vakuumventil nach einem der Ansprüche 1 bis 3, **dadurch gekennzeichnet, dass** der Flanschring (21) über Halterungsschrauben (23) mit der Gehäusewand (19) verbunden ist.

5. Vakuumventil nach Anspruch 4, **dadurch gekennzeichnet, dass** die Halterungsschrauben (23) Löcher (25) in der Gehäusewand (19) durchsetzen und in Gewindebohrungen (24) des Flanschrings (21) eingeschraubt sind.

6. Vakuumventil nach einem der Ansprüche 1 bis 5, **dadurch gekennzeichnet, dass** das Blech der Gehäusewand (19) eine Dicke von weniger als 5mm aufweist.

7. Vakuumventil nach einem der Ansprüche 1 bis 6, **dadurch gekennzeichnet, dass** bezogen auf die Richtung der Achse (5) der Ventilöffnung (4) die Dicke des Flanschrings (21) mehr als das Dreifache der Dicke der Gehäusewand (19) beträgt.

8. Vakuumventil nach einem der Ansprüche 1 bis 7, **dadurch gekennzeichnet, dass** der Flanschring (21) an seiner der Gehäusewand (19) zugewandten Seite eine Vertiefung aufweist, in der die Gehäusewand (19) mit einem an die Fensterausnehmung (20) anschließenden Bereich liegt.

9. Vakuumventil nach einem der Ansprüche 1 bis 8, **dadurch gekennzeichnet, dass** das Ventilgehäuse (1) zusätzlich zur genannten Gehäusewand (19), welche eine erste Gehäusewand (19) bildet, eine zweite Gehäusewand (36) aus Blech aufweist, die zur Ausbildung einer weiteren Ventilöffnung (38) des Ventilgehäuses mit einer Fensterausnehmung (20) versehen ist, wobei zusätzlich zum genannten Flanschring (21), der einen ersten Flanschring (21) bildet, ein zweiter Flanschring (39) vorgesehen ist, welcher die weitere Ventilöffnung (38) umgibt und welcher über Schraubverbindungen mit einem Anschlussflansch (28) einer weiteren Vakuumeinheit (40) verbindbar ist, an der das Vakuumventil anschließbar ist.

10. Vakuumventil nach Anspruch 9, **dadurch gekennzeichnet, dass** der zweite Flanschring (39) zur Verbindung mit dem Anschlussflansch (28) der weiteren Vakuumeinheit (40) Gewindebohrungen (22) zum Einschrauben von Verbindungsschrauben (31) oder Durchtrittsbohrungen (54) zum Durchstecken von Verbindungsschrauben (31) aufweist.

11. Vakuumventil nach Anspruch 9 oder 10, **dadurch gekennzeichnet, dass** die erste und die zweite Gehäusewand (19, 36) auf gegenüberliegenden Seiten des Ventilgehäuses (1) angeordnet sind.

12. Vakuumventil nach einem der Ansprüche 1 bis 11, **dadurch gekennzeichnet, dass** die erste und zweite Gehäusewand (19, 36) über erste und zweite Seitenwände (42, 43) verbunden sind, welche aus Blech bestehen, und über ein Deckelteil (47) und ein Bodenteil (46) des Ventilgehäuses (1) miteinander verbunden sind, wobei das Deckelteil (47) und das Bodenteil (46) zumindest bereichsweise eine Materialstärke von mehr als 5mm aufweisen.

13. Vakuumanlage umfassend eine einen Innenraum aufweisende Vakuumeinheit (27) und ein an die Vakuumeinheit (27) angeschlossenes Vakuumventil, welches ein Verschlussglied (3) und ein Ventilgehäuse (1) mit einer Ventilöffnung (4) aufweist und einen Innenraum (2) umschließt, in dem das Verschlussglied (3) angeordnet ist, welches im geschlossenen Zustand des Vakuumventils an einem die Ventilöffnung (4) umgebenden Ventilsitz (6) anliegt, wobei das Ventilgehäuse (1) eine den Innenraum (2) begrenzende Gehäusewand (19) aus Blech aufweist, welche zur Ausbildung der Ventilöffnung (4) mit einer Fensterausnehmung (20) versehen ist, und wobei die Ventilöffnung (4) von einem Flanschring (21) umgeben ist, der über Schraubverbindungen mit einem Anschlussflansch (28) der Vakuumeinheit (27) verbunden ist, **dadurch gekennzeichnet, dass** der Flanschring (21) den Ventilsitz (6) aufweist, an den das Verschlussglied (3) im geschlossenen Zustand des Vakuumventils angelegt ist.

14. Vakuumanlage nach Anspruch 13, **dadurch gekennzeichnet, dass** die Gehäusewand (19) zwischen dem Flanschring (21) des Vakuumventils und dem Anschlussflansch (28) der Vakuumeinheit (27) geklemmt ist.

15. Vakuumanlage nach Anspruch 13 oder 14, **dadurch gekennzeichnet, dass** zur Verbindung des Vakuumventils mit der Vakuumeinheit (27) der Flanschring (21) Gewindebohrungen (22) aufweist, in welche Durchgangsbohrungen (30) durch den Anschlussflansch (28) durchsetzende Verbindungsschrauben (31) eingeschraubt sind, oder der Anschlussflansch (28) Gewindebohrungen (55) aufweist, in welche Durchgangsbohrungen (54) durch den Flanschring (21) durchsetzende Verbindungsschrauben (31) eingeschraubt sind.
